# FASCICULE DE BREVET EUROPEEN

(11) **EP 0 779 701 B1**
(45) Date de publication et mention de la délivrance du brevet: **16.05.2001**
(21) Numéro de dépôt: 96402637.1
(22) Date de dépôt: 05.12.1996
(51) Int. Cl.: H02M 1/12, B60L 3/00

(54) **Agencement de commande de machine électrique incluant un dispositif de lissage de couple**
Regelanordnung für eine elektrische Maschine mit einer Vorrichtung zur Drehmomentglättung
Control arrangement for an electric machine including a torque smoothing device

(30) Priorité: 14.12.1995 FR 9514865
(43) Date de publication de la demande: 18.06.1997
(73) Titulaire: CEGELEC, 92309 Levallois-Perret (FR)
(72) Inventeur: Courault, Jacques, 77250 Veneux Les Sablons (FR)
(74) Mandataire: Gosse, Michel

(56) Documents cités:
- EP-A- 0 267 548
- WO-A-94/18683
- US-A- 5 227 703
- CONF. RECORD INDUSTRIAL AND COMMERCIAL POWER SYSTEMS, 2 - 6 Mai 1993, ST. PETERSBURG US, pages 85-91, XP000416220 A.H. SAMRA ET AL: "CURRENT INJECTION METHOD TO ELIMINATE HARMONICS IN AC POWER SYSTEMS"
- FIFTH EUROPEAN CONF. ON POWER ELCTRONICS AND APPLICATIONS, vol. 6, no. II, 13 - 16 Septembre 1993, BRIGHTON UK, pages 133-138, XP000416855 A.D.CRANE: "THE CONTROL OF MACHINE CURRENT HARMONICS IN LOAD COMMUTATED INVERTER INDUCTION MOTOR DRIVES"

## Description

La présente invention concerne un agencement de commande de machine électrique incluant un dispositif de lissage de couple, ainsi qu'un tel dispositif de lissage de couple.

Il est commun de chercher à lisser le couple d'une machine électrique telle qu'un moteur d'entraînement d'installation métallurgique, de traction ferroviaire ou de propulsion marine. Le but est d'éviter des vibrations préjudiciables à l'efficacité comme à la longévité de la machine électrique et de l'installation qu'elle anime. Cela s'effectue généralement par action sur le dispositif d'alimentation, qui est un convertisseur d'alimentation, de manière à modifier la forme des courants et/ou tensions qu'il fournit à la machine, notamment par réduction de l'amplitude d'harmoniques. On en trouvera un exemple dans le document de brevet EP - 267548.

Ces solutions connues, outre qu'elles sont imparfaites dans leurs résultats, demandent des aménagements des convertisseurs d'alimentation qui nuisent à leur efficacité propre, ce qui fait qu'elles ne sont pratiquement pas applicables pour des machines de grande puissance.

La présente invention vise à fournir une solution qui ne souffre pas de ces inconvénients et limitations.

Cet objet est atteint dans un agencement de commande de machine électrique incluant un dispositif de lissage de couple dans lequel ledit dispositif de lissage de couple comprend des moyens d'observation de couple couplés à ladite machine électrique et fournissant des signaux de couple, des moyens de traitement de lissage recevant lesdits signaux de couple et pourvus d'une référence de couple au moins, produisant des signaux de lissage de couple et un générateur de lissage recevant lesdits signaux de lissage et fournissant une énergie électrique d'appoint à ladite machine, telle qu'elle vise à rendre son couple conforme à ladite référence de couple.

De la sorte la fonction de lissage de couple est séparée de l'alimentation de la machine. L'une et l'autre peuvent être optimisées séparément. De plus les objectifs de la fonction de lissage de couple peuvent être plus larges qu'une commande de l'alimentation.

Avantageusement, ledit générateur de lissage est un convertisseur d'alimentation. En effet, la technique fournit des convertisseurs d'alimentation auxquels on peut demander des formes de courants/tensions variées. Puisqu'ils ne s'agit que de fournir un appoint à l'énergie d'alimentation de la machine, en vue du lissage de couple seulement, ce convertisseur pourra avoir une puissance plus faible que celle dudit dispositif d'alimentation.

De préférence, la sortie dudit générateur de lissage est couplée en parallèle sur un circuit d'alimentation au moins de ladite machine. L'énergie d'appoint destinée au lissage de couple est donc fournie à la machine sans aucune modification de celle-ci ni de son circuit d'alimentation.

Additionnellement toutefois, une inductance est disposée en série sur ledit circuit d'alimentation, en amont dudit couplage en parallèle, ce qui limite la charge apportée audit générateur de lissage par la sortie dudit dispositif d'alimentation.

Et en outre, une capacité est couplée en parallèle à l'entrée de la machine ; elle filtre à la fois l'alimentation de la machine et ladite énergie d'appoint.

Dans une forme de mise en oeuvre, lesdits moyens d'observation de couple détectent le courant et la tension fournis à ladite machine ; les fréquences, phases et amplitudes en permettent le calcul du couple engendré dans la machine et, par conséquent, des corrections éventuelles à lui apporter. L'énergie d'appoint étant évaluée, il suffit de la faire varier de manière que de telles corrections soient minimales.

Dans une autre forme de mise en oeuvre, lesdits moyens d'observation comprennent des capteurs associés à la machine. Ces capteurs, tels que des jauges de contraintes disposées au niveau des fixations de la machine, permettent une évaluation instantanée du couple, par les efforts et vibrations sollicitant le stator.

Enfin, dans le cas où la machine dispose de plusieurs circuits d'alimentation ledit dispositif est avantageusement agencé pour les observer tous, mais pour ne fournir ladite énergie d'appoint que sur un seul d'entre eux.

Les différents objets et caractéristiques de l'invention seront détaillés dans la description qui va suivre d'un exemple de mise en oeuvre de l'invention, fourni à titre d'exemple non limitatif, en se référant aux figures annexées qui représentent :
- la figure 1, le schéma de principe d'un agencement de commande de machine électrique conforme à la présente invention,
- la figure 2, des formes d'onde de courants illustrant le mode d'action de l'agencement de commande de la figure 1.
- la figure 3, le diagramme plus détaillé d'un agencement de commande de machine électrique conforme à celui de la figure 1,
- la figure 4, un diagramme simplifié d'un agencement conforme à ceux des figures 1 à 3, pour une machine à plusieurs circuits d'alimentation,
- la figure 5, un diagramme semblable à celui de la figure 1, pour un agencement comprenant des capteurs associés à la machine électrique,
- la figure 6, un diagramme d'une variante de l'agencement de la figure 1 concernant une machine électrique à courant continu.

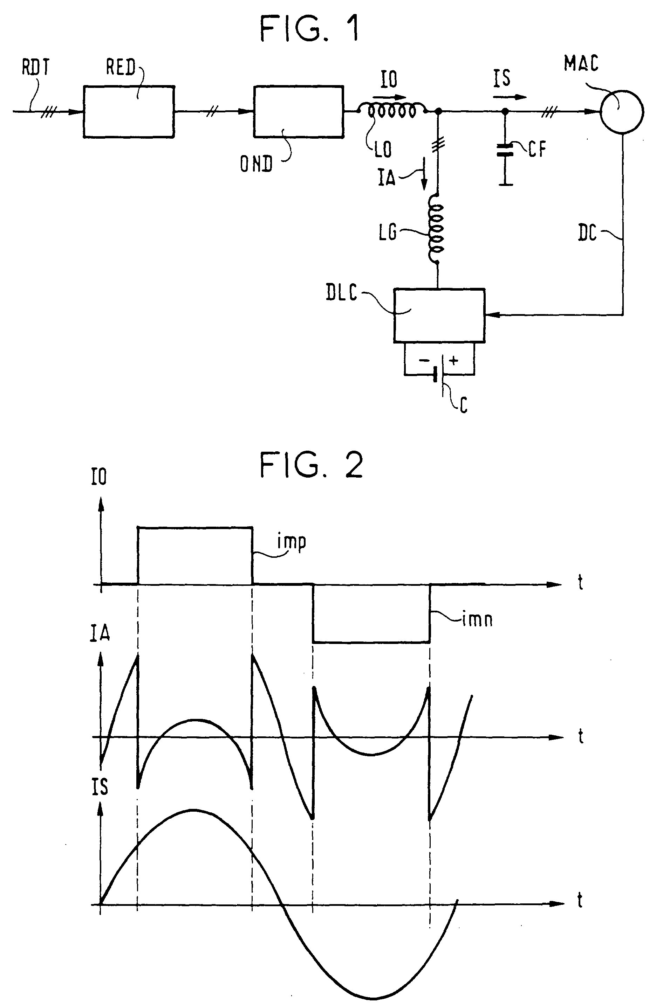

On se reportera d'abord à la figure 1. On y trouve un branchement RDT à un réseau de distribution, un redresseur RED, un onduleur OND, une inductance LO, une machine électrique MAC, une source de courant continu C, un dispositif de lissage DLC, une capacité de filtrage CF.

Le branchement RDT, à trois phases, alimente le redresseur RED qui fournit une alimentation continue par une liaison bifilaire à l'onduleur OND, lequel produit un courant triphasé IO traversant l'inductance LO et alimentant la machine MAC. Une telle disposition est classique. Le couple RED-OND peut être optimisé en fonction des besoins de la machine MAC. Cette dernière peut-être un moteur de laminoir, de locomotive ou encore de navire.

Il est généralement souhaitable de faire en sorte qu'à toutes les allures le couple évolue progressivement, sans à-coups, et la machine ainsi exempte de vibrations préjudiciables. Mais ce besoin est plus sensible aux allures réduites. En effet les vibrations propres au laminoir, à la locomotive, ou au propulseur du navire, ne masquent plus alors celles de la machine, comme cela est le cas aux allures élevées. De plus, à certaines allures réduites, la machine risque d'exciter des résonances mécaniques.

Pour ces raisons l'invention prévoit donc, alimentés par une source SC, un dispositif de lissage DLC apte à observer le couple engendré par la machine MAC, ce qui est illustré par une liaison DC, à traiter les signaux de couple ainsi obtenus par rapport à certaines références internes de couple et à produire des signaux internes de lissage de couple à partir desquels est engendré une énergie d'appoint, sous la forme d'un courant IA qui, à travers une inductance de lissage LG, vient s'ajouter au courant IO pour constituer le courant IS alimentant la machine MAC.

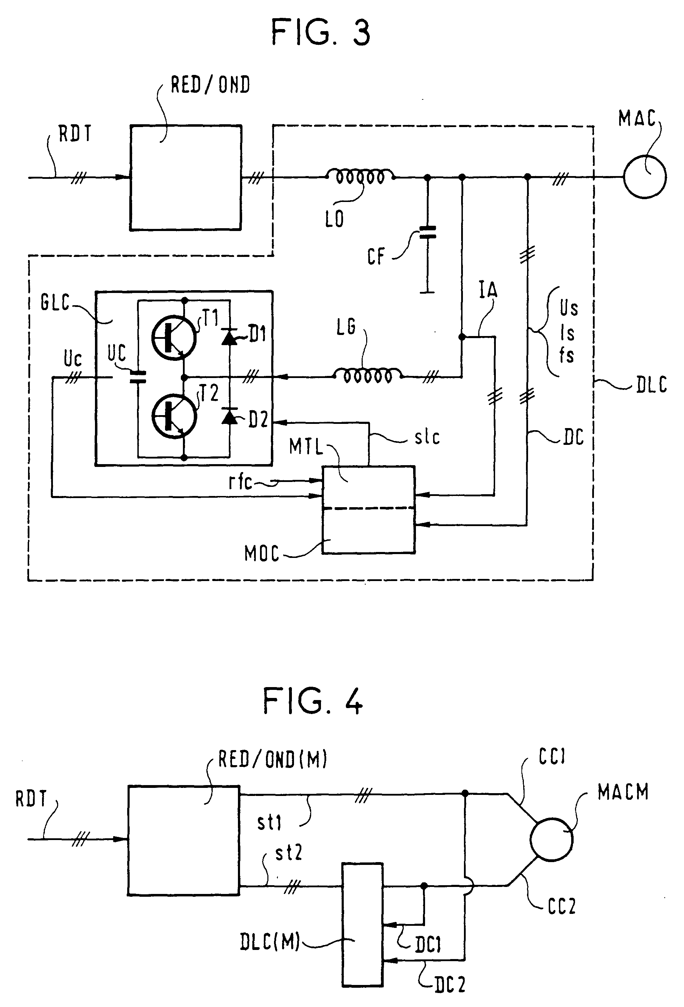

A cette fin le dispositif DLC dont un mode de réalisation plus détaillé est fourni à la figure 3, est alimenté par une source de courant continu C.

Par ailleurs, l'entrée de la machine MAC est pourvue d'un condensateur de filtrage CF éliminant des composantes hautes fréquences tant en provenance de l'onduleur OND que du dispositif de lissage de couple DLC.

Ainsi, l'invention consiste essentiellement en ce qu'un dispositif de lissage de couple, observant que le couple n'est pas conforme à une référence de couple, produit une énergie d'appoint qui s'ajoute à l'énergie d'alimentation de la machine de manière que le couple de la machine tende à s'identifier à la référence de couple. L'énergie d'appoint en question est déjà limitée par le fait qu'elle constitue un appoint visant essentiellement à réduire des harmoniques ; elle l'est davantage encore dans la mesure où elle peut être limitée à ce qui est nécessaire aux allures réduites de la machine auxquelles la puissance fournie à la machine est encore relativement faible.

La figure 2 illustre les courants IO, IA, IS au cours du temps t, dans le cas simple ou l'onduleur OND fournit un signal formé alternativement d'une impulsion positive imp et d'une impulsion négative imn, une seule période de ce courant alternatif étant représentée par la figure. Appliqué tel quel à la machine MAC, ce courant engendrerait des vibrations dues aux harmoniques qu'il contient. Le dispositif DLC détecte de telles vibrations, par la liaison DC et, en supposant qu'il contienne et applique une référence de couple indiquant que le couple doit être constant, il engendre le signal IA ayant la forme représentée, aussi proche que possible de la somme des harmoniques contenues dans le signal IO. Comme l'indique le sens de la flèche associée au signal IA, ce dernier est en fait soustrait du courant IO, de sorte que le courant IS, comme représenté, tend à être une sinusoïde ne contenant aucune harmonique et que le couple engendré par la machine MAC tend à être constant. Dans la période et continuellement, tout résidu de variation de couple tend ainsi à être corrigé par une variation concomitante du courant IA.

Dans ce qui précède, on a adopté une représentation des énergies en jeu sous forme de courants seulement. L'homme de métier saura faire les conversions appropriées pour tenir compte des tensions.

Par ailleurs, on comprend bien que la forme d'onde produite par l'onduleur OND peut être différente, notamment dans sa fréquence, ou sa phase, ou son amplitude. Le dispositif de lissage de couple DLC s'y adaptera automatiquement. On le verra d'ailleurs plus clairement en considérant un exemple de mise en oeuvre plus détaillé, en se référant à la figure 3.

De façon générale, à la figure 3, on a conservé les mêmes références qu'à la figure 1 pour les éléments remplissant la même fonction. C'est ainsi que l'on retrouve, dans un même bloc RED/OND, le redresseur REC et l'onduleur 50 OND de la figure 1, l'inductance LO et la machine MAC, ainsi que le dispositif de lissage de couple DLC, avec les inductances LO et LG et la capacité CF.

Le dispositif de lissage de couple DLC comprend encore des moyens d'observation de couple MOC, des moyens de traitement de lissage de couple MTL, une source d'une ou plusieurs références de couple rfc et un générateur de lissage de couple GLC. Ces différents moyens peuvent avantageusement revêtir la forme d'un ordinateur associé à des mémoires.

La liaison DC est connectée à l'entrée de la machine MAC et permet, par observations de la tension Uₛ, du courant Is et de la fréquence fₛ (qui se déduit par exemple de la tension Uₛ) de calculer le couple engendré par la machine MAC et, en particulier, de faire apparaître toute irrégularité de ce couple. C'est ce que font les moyens MOC. Les moyens de traitement MTL reçoivent par ailleurs une référence de couple rfc, au moins, qui peut simplement indiquer le pourcentage de variation de couple autorisé sur une, deux..., n périodes. Compte tenu de l'historique de la marche de la machine (vitesse croissante, ou décroissante, ou stable), cela permet de modifier le courant IA pour que le courant quasi-sinusoïdal IS, tout en réduisant autant que possible toute variation de couple sur la période, permette de poursuivre, de façon régulière, sans à-coups, un éventuel changement d'allure en cours. Le résultat est un signal de lissage de couple slc qui est transmis par les moyens MTL à un générateur de lissage de couple GLC pouvant prendre la forme d'un onduleur triphasé comprenant, de façon connue en soi, des bras formés chaque de commutateurs T1, T2 et de diodes D1, D2, alimentés par une source de courant continu UC. La tension Uc engendrée par ce générateur est transmise aux moyens de traitement MTL, de même que le courant IA, ce qui permet de lui appliquer une commande en boucle, selon une technique bien connue de l'homme de métier.

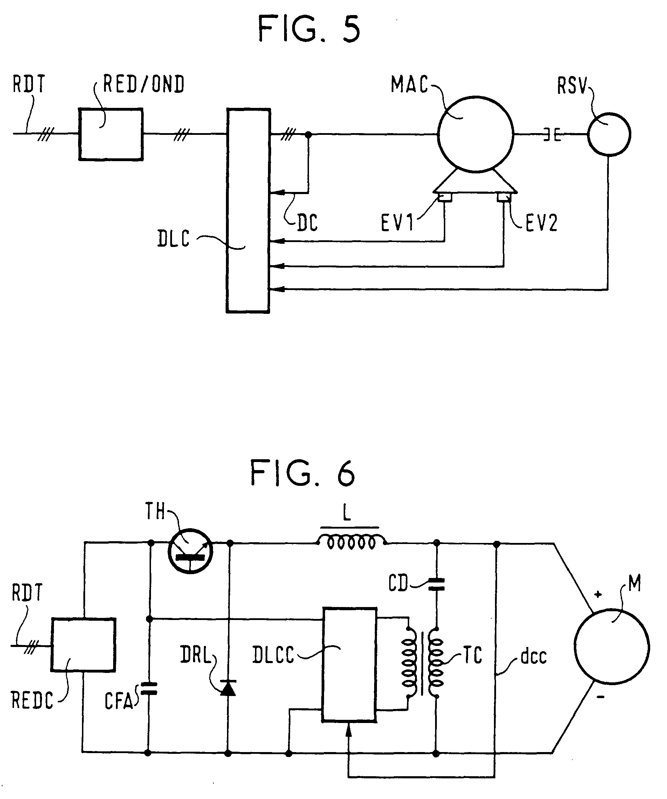

Le fonctionnement et les résultats obtenus par un tel agencement sont conformes à ceux que l'on a exposés à propos de la figure 1. On remarquera toutefois que le couple de la machine MAC n'est connu que par l'observation des tensions et courants qui l'alimentent. Les moyens d'observation MOC, même pourvus d'une modélisation élaborée de la machine et de l'installation qu'elle anime, ne peuvent fournir une représentation exacte et actualisée du couple. On y reviendra en considérant une variante de cet agencement illustrée par la figure 5.

Avant cela, en se référant à la figure 4, on considérera le cas d'une machine MACM à plusieurs étoiles chacune alimentée par une sortie triphasée st1, st2 d'un redresseur-onduleur multiple RED/OND(M). Comme on peut le voir à la figure 4, le dispositif de lissage de couple DLC(M) observe en DC1, DC2 les différents circuits d'alimentation de la machine et n'est agencé que pour agir, par la fourniture d'une énergie d'appoint, que sur l'un d'entre eux seulement.

La figure 5, en revenant à une configuration telle que celle de la figure 3, représente un agencement comprenant les mêmes éléments essentiels (RDT, RED/OND, DLC, DC, MAC), mais dans lequel le dispositif DLC reçoit non seulement, sur la liaison DC, des grandeurs Uₛ, Iₛ, fₛ comme précédemment, mais aussi les signaux de sortie de capteurs d'efforts ou de vibrations EV1, EV2 installés sur les supports de la machine MAC et d'un résolveur disposé sur l'arbre. Ces signaux font apparaître directement les variations de couple. Des capteurs semblables disposés selon les deux axes perpendiculaires à l'arbre permettent en particulier de déceler tout balourd et l'agencement selon l'invention permet ainsi d'en corriger les effets.

La figure 6 représente un cas d'application de l'invention à un moteur à courant continu. On y trouve, alimenté par un réseau triphasé RDT, un redresseur-régulateur REDC fournissant un courant continu à un moteur M par l'intermédiaire d'une inductance L. Dans le redresseur-régulateur REDC, on a figuré un transistor TH, qui peut être un hacheur, régulant le courant d'alimentation du moteur M, un condensateur accumulateur CFA en amont de ce transistor et une diode de roue libre DRL en aval. La tension continue aux bornes du condensateur accumulateur CFA alimente en outre un dispositif de lissage de couple DLCC qui reçoit par une liaison Dcc une évaluation de la tension et du courant d'alimentation du moteur M. Le dispositif DLCC, semblable aux dispositifs de lissage de couples précédents, est couplé par un transformateur TC et un condensateur de découplage CD aux bornes du moteur M auquel il fournit une énergie d'appoint visant tout comme dans les agencements précédemment décrits à réduire ou contrôler les variations de couple.

L'invention, on le voit, s'applique également au cas des moteurs à courant continu.

## Revendications

1. Agencement de commande de machine électrique incluant un dispositif de lissage de couple caractérisé en ce que ledit dispositif de lissage de couple (DLC) comprend des moyens d'observation de couple couplés à ladite machine électrique et fournissant des signaux de couple, des moyens de traitement de lissage (MTL) recevant lesdits signaux de couple et pourvus d'une référence de couple au moins, produisant des signaux de lissage de couple et un générateur de lissage (GLC) recevant lesdits signaux de lissage et fournissant une énergie électrique d'appoint à ladite machine, telle qu'elle vise à rendre son couple conforme à ladite référence de couple.

2. Agencement de commande de machine électrique conforme à la revendication 1, caractérisé en ce que ledit générateur de lissage (GLC) est un convertisseur d'alimentation.

3. Agencement de commande de machine électrique conforme à la revendication 2, caractérisé en ce que la sortie dudit générateur de lissage (GLC) est couplée en parallèle sur un circuit d'alimentation au moins de ladite machine.

4. Agencement de commande de machine électrique conforme à la revendication 3, caractérisé en ce que ledit circuit d'alimentation inclut une inductance (LO) connectée en série sur ledit circuit d'alimentation, en amont dudit couplage en parallèle.

5. Agencement de commande de machine électrique conforme à la revendication aux revendications 3 ou 8, caractérisé en ce que ledit circuit d'alimentation comprend une capacité (CF) couplée en parallèle à l'entrée de ladite machine.

6. Agencement à l'une quelconque des revendications 1 à 5, caractérisé en ce que lesdits moyens d'observation de couple détectent le courant et la tension fournis à ladite machine.

7. Agencement de commande de machine électrique conforme à la revendication 6, caractérisé en ce que lesdits moyens d'observation détectent aussi ladite énergie d'appoint.

8. Agencement à l'une quelconque des revendications 1 à 5, caractérisé en ce que lesdits moyens d'observation de couple comprennent des capteurs d'efforts ou de vibrations (EV1, EV2) associés à ladite machine.

9. Dispositif de lissage de couple conforme à l'une quelconque des revendications qui précèdent.

10. Agencement de lissage de couple conforme aux revendications 1 à 8, caractérisé en ce qu'il comprend un dispositif de lissage de couple observant conjointement une pluralité de circuits d'alimentation de la machine et fournissant ladite énergie d'appoint sur un de ces circuits d'alimentation seulement.

## Patentansprüche

1. Regelanordnung für eine elektrische Maschine mit einer Drehmoment-Glättungsvorrichtung, dadurch gekennzeichnet, dass die Drehmoment-Glättungsvorrichtung (DLC) an die elektrische Maschine gekoppelte Drehmoment-Beobachtungsmittel, die Drehmomentsignale liefern, Glättungsverarbeitungsmittel (MTL), die die Drehmomentsignale empfangen und mit wenigstens einem Referenzdrehmoment versehen sind und Drehmoment-Glättungssignale erzeugen, und einen Glättungsgenerator (GLC) umfasst, der die Glättungssignale empfängt und eine elektrische Zusatzenergie an die Maschine liefert, so dass diese darauf abzielt, ihr Drehmoment mit dem Referenzdrehmoment in Übereinstimmung zu bringen.

2. Regeleinrichtung für eine elektrische Maschine nach Anspruch 1, dadurch gekennzeichnet, dass der Glättungsgenerator (GLC) ein Versorgungswandler ist.

3. Regelanordnung für eine elektrische Maschine nach Anspruch 2, dadurch gekennzeichnet, dass der Ausgang des Glättungsgenerators (GLC) parallel zu wenigstens einer Versorgungsschaltung der Maschine geschaltet ist.

4. Regelanordnung für eine elektrische Maschine nach Anspruch 3, dadurch gekennzeichnet, dass die Versorgungsschaltung eine Induktivität (LO) enthält, die mit der Versorgungsschaltung stromaufwärts von der Parallelschaltung in Reihe geschaltet ist.

5. Steueranordnung für eine elektrische Maschine nach Anspruch 3 oder 8, dadurch gekennzeichnet, dass die Versorgungsschaltung eine zum Eingang der Maschine parallel gekoppelte Kapazität (CF) umfasst.

6. Anordnung nach einem beliebigen der Ansprüche 1 bis 5, dadurch gekennzeichnet, dass die Drehmoment-Beobachtungsmittel den Strom und die Spannung erfassen, die der Maschine geliefert werden.

7. Regelanordnung für eine elektrische Maschine nach Anspruch 6, dadurch gekennzeichnet, dass die Beobachtungsmittel auch die Zusatzenergie erfassen.

8. Anordnung nach einem beliebigen der Ansprüche 1 bis 5, dadurch gekennzeichnet, dass die Drehmoment-Beobachtungsmittel der Maschine zugeordnete Kraft-oder Schwingungsaufnehmer (EV1, EV2) umfassen.

9. Drehmoment-Glättungsvorrichtung nach einem der vorhergehenden Ansprüche.

10. Anordnung zur Drehmomentglättung nach den Ansprüchen 1 bis 8, dadurch gekennzeichnet, dass sie eine Drehmoment-Glättungsvorrichtung umfasst, die gemeinsam eine Mehrzahl von Versorgungsschaltungen der Maschine beobachtet und die Zusatzenergie an nur eine dieser Versorgungsschaltungen liefert.

## Claims

1. An electric machine control system including a torque smoothing device characterized in that said torque smoothing device (DLC) includes torque monitoring means connected to said electric machine and supplying torque signals, smoothing processor means (MTL) receiving said torque signals, having at least one torque reference and producing torque smoothing signals and a smoothing generator (GLC) receiving said smoothing signals and supplying top-up electric power to said machine to make its torque conform to said torque reference.

2. An electric machine control system according to claim 1 characterized in that said smoothing generator (GLC) is a power supply converter.

3. An electric machine control system according to claim 2 characterized in that said smoothing generator (GLC) has an output connected in parallel with at least one power supply circuit of said machine.

4. An electric machine control system according to claim 3 characterized in that said power supply circuit includes an inductor (LO) connected in series with said power supply circuit on the upstream side of said parallel connection.

5. An electric machine control system according to claim 3 or claim 8 characterized in that said power supply circuit includes a capacitor (CF) connected in parallel with the input of said machine.

6. A system according to any one of claims 1 to 5 characterized in that said torque monitoring means detect the current and the voltage supplied to said machine.

7. An electric machine control system according to claim 6 characterized in that said monitoring means also detect said top-up power.

8. A system according to any one of claims 1 to 5 characterized in that said torque monitoring means include force or vibration sensors (EV1, EV2) associated with said machine.

9. A torque smoothing device according to any one of the preceding claims.

10. A torque smoothing system according to claims 1 to 8 characterized in that it comprises a torque smoothing device conjointly monitoring a plurality of power supply circuits of the machine and supplying said top-up power to one only of said power supply circuits.
